# DEMANDE DE BREVET EUROPEEN

(11) **EP 0 932 007 A1**
(43) Date de publication de la demande: **28.07.1999**
(21) Numéro de dépôt: 99400023.0
(22) Date de dépôt: 07.01.1999
(51) Int. Cl.: F25J 3/08

(54) **Installation et procédé de filtration en phase liquide d'un fluide cryogénique**

(30) Priorité: 23.01.1998 FR 9800725
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); Carboxyque Française, 92088 Paris La Défense (FR)
(72) Inventeur: Germain, Jean-Pierre, 78180 Montigny le Bretonneux (FR); Guillaume, Philippe, Tour Ariane, 92088 Paris la Defense (FR); Buil, José, 94260 Fresnes (FR)
(74) Mandataire: Mellul, Sylvie Lisette

(57) **Abrégé**

L'invention concerne une installation (12) de filtration en phase liquide d'un fluide cryogénique présentant une phase liquide pour un couple pression/température compris entre 6 et 25 bars et -100°C et 0°C. Elle comporte, en milieu ambiant, un organe (30A, 30B) de filtration disposé entre une entrée d'alimentation (18) et une sortie d'utilisation (14). L'organe de filtration (30A, 30B) est adapté pour filtrer les microorganismes et/ou particules dont la taille est supérieure ou égale à 0,1 pm, et adapté pour provoquer une perte de charge inférieure à 7 bars. L'installation comporte des moyens (10) pour fournir, à l'organe de filtration (30A, 30B), le fluide cryogénique en phase liquide.

Application au dioxyde de carbone liquide.

## Description

La présente invention concerne une installation de filtration en phase liquide d'un fluide cryogénique. Elle concerne en outre un procédé de filtration et une utilisation d'un organe de filtration pour la filtration d'un tel fluide cryogénique en phase liquide.

L'invention s'applique notamment dans le domaine de l'industrie agro-alimentaire et dans le domaine pharmaceutique. En effet, dans ces domaines particuliers, il est nécessaire de garantir une hygiène et une asepsie parfaites des fluides cryogéniques mis en oeuvre (on emploi même parfois le terme de fluide cryogénique « stérilisé »).

A titre illustratif, il est nécessaire, lorsque le dioxyde de carbone (CO₂) est utilisé en tant qu'agent frigorigène pour refroidir des denrées alimentaires, de s'assurer que celui-ci soit exempt de particules et/ou micro-organismes pathogènes.

De même, et toujours à titre illustratif, dans le domaine pharmaceutique, lorsque du protoxyde d'azote (N₂O) est dispensé à un malade dans une installation d'assistance respiratoire, celui-ci doit être préalablement filtré afin d'assurer une pureté satisfaisante du gaz.

Il s'avère que la filtration de ces fluides cryogéniques est délicate du fait des risques de vaporisation ou solidification (selon le fluide considéré) résultant de la mise en oeuvre de l'organe de filtration. Ainsi par exemple, dans le cas du dioxyde de carbone, le problème est d'autant plus complexe que le dioxyde de carbone liquide a tendance à passer à l'état solide, en créant de la "neige carbonique" provoquant l'obturation des conduites de l'installation de filtration.

Il est connu, afin d'assurer la filtration d'azote liquide en phase liquide (et donc de récupérer en sortie de filtration un fluide essentiellement non diphasique) de disposer l'organe de filtration à l'intérieur d'un bain de liquide cryogénique (en général de même nature que celui qui doit être filtré), assurant un refroidissement permanent de l'organe de filtration.

Une telle solution pour la filtration d'azote liquide est proposée, par exemple, dans le document US-A-4.759.848.

Bien que de tels moyens de refroidissement de l'organe de filtration soient indispensables pour des fluides cryogéniques tels que l'azote et l'oxygène qui ont des températures de liquéfaction très basses, il serait avantageux de disposer, pour des fluides cryogéniques ayant des températures de liquéfaction plus élevées, tels que le dioxyde de carbone ou encore le protoxyde d'azote, d'installations de filtration moins lourdes, et pourtant aussi performantes en terme de taille de particules filtrées, ne nécessitant pas le recours à des moyens de refroidissement et dans lesquelles le filtre peut être maintenu en milieu ambiant et notamment à température ambiante voisine de 20 ou 25°C.

L'expression "milieu ambiant" désigne les conditions atmosphériques de température et pression régnant dans le local dans lequel est disposée l'installation de filtration.

L'invention a pour but de foumir une telle installation de filtration/stérilisation permettant de s'affranchir du refroidissement permanent de l'organe de filtration.

A cet effet, l'invention a pour objet une installation de filtration en phase liquide d'un fluide cryogénique présentant une phase liquide pour au moins un couple pression/température compris entre 6 et 25 bars d'une part et -100°C et 0°C d'autre part, comportant, en milieu ambiant, un organe de filtration disposé entre une entrée d'alimentation du fluide cryogénique et une sortie d'utilisation du fluide cryogénique filtré, dans laquelle l'organe de filtration est apte à filtrer les microorganismes et/ou particules dont la taille est supérieure ou égale à 0,1 µm, et adapté pour provoquer une perte de charge inférieure à 7 bars, laquelle installation comporte, à l'entrée d'alimentation, des moyens pour fournir, à l'organe de filtration, le fluide cryogénique en phase liquide.

Suivant des modes particuliers de réalisation, l'installation peut comporter l'une ou plusieurs des caractéristiques suivantes :
- l'organe de filtration est apte à filtrer les micro-organismes et/ou particules dont la taille est supérieure ou égale à 0,2 µm;
- l'organe de filtration est adapté pour provoquer une perte de charge inférieure à 5 bars;
- les moyens pour fournir à l'organe de filtration le fluide cryogénique en phase liquide, sont aptes à fournir le fluide cryogénique en phase liquide sous une pression comprise entre 6 et 60 bars et à une température comprise entre -100°C et 0°C;
- l'installation comporte un déverseur dont l'entrée est piquée en amont de l'organe de filtration;
- le déverseur a une pression différentielle de déclenchement comprise entre 2 et 10 bars;
- les moyens pour fournir, à l'organe de filtration, le fluide cryogénique en phase liquide comportent un réservoir de stockage du fluide cryogénique sous pression, et l'installation comporte par ailleurs un déverseur dont l'entrée est piquée en amont de l'organe de filtration et dont la sortie est reliée au réservoir;
- le filtre est un filtre en céramique microporeuse délimitant un ensemble de canaux d'entrée parallèles;
- les moyens pour fournir le fluide cryogénique en phase liquide sont adaptés pour fournir le fluide sous une pression comprise entre 16 et 25 bars et à une température comprise entre -25°C et -15°C.

Comme on l'aura compris à la lecture de ce qui précède, les fluides cryogéniques visés par la présente invention sont ceux présentant une phase liquide pour au moins un couple pression/température compris entre 6 et 25 bars d'une part et -100°C et 0°C d'autre part.

Néanmoins, il est possible d'alimenter l'organe de filtration dans des conditions de pression/température en dehors de ces gammes, l'essentiel étant que cela soit en phase liquide, par exemple comme signalé plus haut sous une pression comprise entre 6 et 60 bars pour certains fluides comme le C02.

L'invention a en outre pour objet un procédé de filtration en phase liquide d'un fluide cryogénique présentant une phase liquide pour au moins un couple pression/température compris entre 6 et 25 bars d'une part et-100°C à 0°C d'autre part, selon lequel on introduit, à l'entrée d'un organe de filtration apte à filtrer les micro-organismes et/ou particules dont la taille est supérieure ou égale à 0,1 µm, et adapté pour provoquer une perte de charge inférieure à 7 bars, disposé en milieu ambiant, le fluide cryogénique en phase liquide.

En variante, en dehors des phases de consommation du fluide cryogénique filtré, on assure, au moins périodiquement, une circulation en boucle du fluide cryogénique liquide au moins en amont de l'organe de filtration.

L'invention a également pour objet l'utilisation d'un organe de filtration disposé en milieu ambiant, apte à filtrer les micro-organismes et/ou particules dont la taille est supérieure ou égale à 0,1 µm, et adapté pour provoquer une perte de charge inférieure à 7 bars, afin de filtrer en phase liquide un fluide cryogénique présentant une phase liquide pour au moins un couple pression/température compris entre 6 et 25 bars d'une part et -100°C et 0°C d'autre part.

L'invention sera mieux comprise à la lecture de la description qui va suivre, donnée uniquement à titre d'exemple et faite en se référant aux dessins, sur lesquels :
- La figure 1 est une vue schématique d'une installation de distribution d'un fluide cryogénique comportant une installation de filtration selon l'invention; et
- La figure 2 est une vue en perspective d'une membrane de filtration mise en oeuvre dans l'installation de la figure 1.

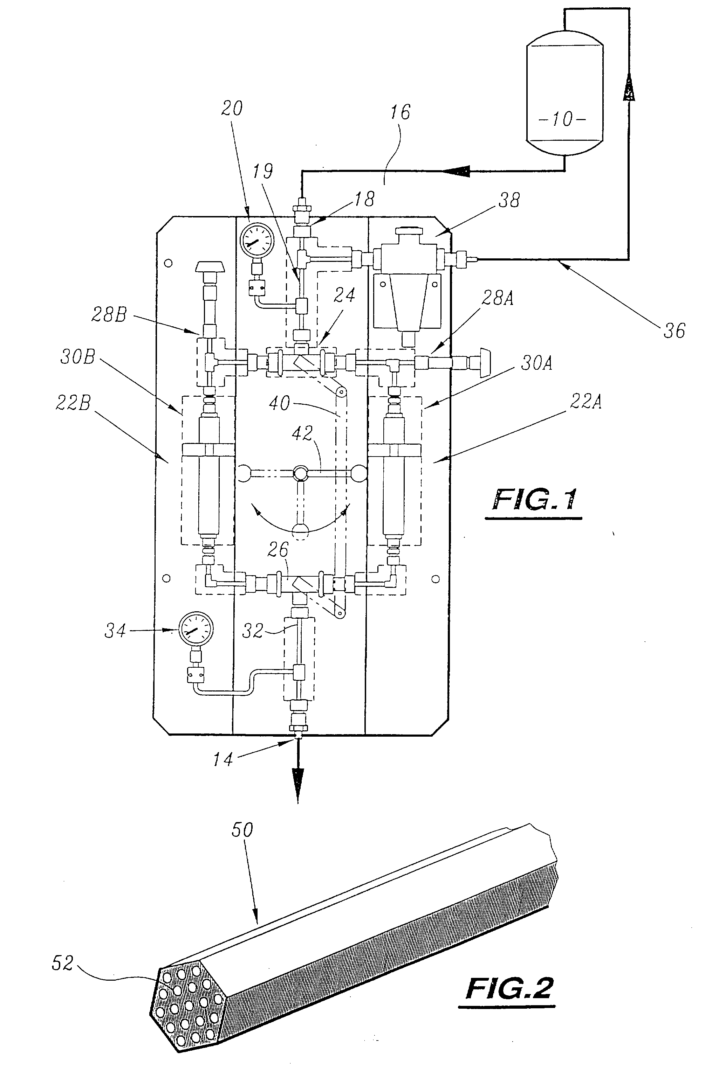

L'installation de distribution d'un fluide cryogénique liquide, par exemple de dioxyde de carbone liquide, représentée sur la figure 1, comporte un réservoir 10 de stockage du fluide, par exemple de dioxyde de carbone liquide.

Pour des raisons de simplification, nous évoquerons dans tout ce qui suit l'installation de distribution d'un fluide cryogénique liquide de la figure 1 comme une installation « de distribution de dioxyde de carbone liquide », en gardant à l'esprit bien entendu qu'elle conviendrait pour la distribution d'autres fluides entrant dans le cadre de la présente invention.

Le réservoir 10 de la figure 1 est relié à une installation 12 de filtration selon l'invention, à la sortie notée 14 de laquelle, est prévu un distributeur de dioxyde de carbone filtré.

Le réservoir 10 est adapté pour assurer un stockage du dioxyde de carbone liquide à une température comprise entre -25°C et -15°C et avantageusement sensiblement égale à -20°C, et sous une pression comprise entre 17 bars et 23 bars et avantageusement sensiblement égale à 20 bars. Une ouverture ménagée dans le fond du réservoir 10 est reliée par une conduite 16 à une entrée 18 d'alimentation de l'installation de filtration. Cette entrée est munie d'un manomètre 20.

L'entrée 18 est reliée par une conduite 19 à deux branches de filtration parallèles notées 22A, 22B. Ces deux branches sont identiques et sont alimentées depuis une vanne de dérivation 24 adaptée pour relier sélectivement l'entrée d'alimentation 18 à l'une ou l'autre des branches 22A, 22B. En sortie, ces deux branches convergent vers une vanne de dérivation 26.

Chaque branche comporte successivement suivant le trajet de circulation du dioxyde de carbone liquide une vanne 28A, 28B et un organe de filtration 30A, 30B. Les sorties des filtres sont reliées aux deux entrées de la vanne de dérivation 26.

La sortie commune de la vanne 26 est reliée, par l'intermédiaire d'une conduite 32, à la sortie de distribution 14.

Cette sortie 14 est munie d'un ensemble de production de neige carbonique non représenté comprenant un flexible de dix mètres équipé d'un pistolet non représenté de délivrance du dioxyde de carbone sous forme solide.

En variante, la sortie 14 est munie d'un ensemble de canalisations rigides pouvant être reliées à des tunnels, cellules ou autres appareils de refroidissement cryogéniques, par exemple des appareils de traitement de produits alimentaires, ou encore des réacteurs pharmaceutiques.

Sur la conduite 32, est piqué un manomètre de pression 34.

En outre, une conduite de renvoi 36 est prévue entre la conduite 19 en amont de la vanne de dérivation 24 et la partie supérieure du réservoir de stockage 10. Cette conduite de dérivation 36 est munie d'un déverseur 38 dont la pression de tarage est ici comprise entre 6 et 10 bars et avantageusement sensiblement égale à 8 bars. La pression de tarage correspond à la pression différentielle entre l'entrée et la sortie du déverseur au-dessus de laquelle celui-ci se déclenche et devient passant.

Les deux vannes 24 et 26 ont leurs tiges de commande reliées à une même tringle 40 commandée par une poignée d'actionnement unique 42. Ainsi, les deux vannes sont commandées pour assurer sélectivement la connexion simultanée des entrée 18 et sortie 14 de l'installation avec soit la branche de filtration 22A, soit la branche de filtration 22B.

Chacun des éléments de l'installation de filtration est avantageusement recouvert par des éléments tubulaires d'isolation thermique (calorifugeage) évitant une déperdition de frigories de l'installation vers l'atmosphère environnante.

Les deux organes de filtration 30A, 30B sont ici des modules filtrants commercialisés en France par la Société des Céramiques Techniques de Tarbes sous le nom de "Membralox". Dans le mode de réalisation représenté, l'organe de filtration a une longueur de 11 pouces et une porosité de 0,01 micron. Il convient de noter que ces modules filtrants sont vendu et décrits par le fabriquant comme devant être utilisés pour la filtration d'un flux gazeux.

Les travaux menés à bien par la Demanderesse ont permis de démontrer qu'un tel filtre « gazeux » était adapté pour la filtration des fluides cryogéniques visés par la présente invention, en milieu ambiant, dans les conditions recommandées par la présente invention.

Un tel élément filtrant comporte un boîtier extérieur métallique tubulaire muni à ses extrémités d'une entrée pour le fluide à filtrer et d'une sortie d'évacuation du fluide filtré.

A l'intérieur du boîtier est disposé un élément filtrant, appelé membrane. Celle-ci est représentée sur la figure 2 et désignée par la référence 50. La membrane est réalisée en céramique microporeuse.

Cette membrane présente une forme extérieure tubulaire de section hexagonale. Elle comporte un ensemble de canaux parallèles 52 débouchant à une extrémité et obturé à l'autre extrémité. La face sur laquelle débouchent les canaux 52 est disposée en entrée du filtre. Ainsi, le fluide à filtrer pénètre dans la membrane filtrante par les canaux 52 et ressort de celle-ci par sa surface latérale de section hexagonale pour ensuite s'échapper par la sortie d'évacuation de l'organe de filtration.

Dans l'installation et l'application représentée, lorsque la sortie de distribution 14 est ouverte, de sorte qu'elle délivre à son extrémité du dioxyde de carbone liquide, le débit circulant au travers de l'un des organes de filtration 30A ou 30B est typiquement compris entre 30 à 50 kg/h.

Pour un tel débit, le filtre provoque ici une perte de charge de l'ordre de 0,5 bar.

L'installation décrite sur la figure 1 fonctionne de la manière suivante.

Lorsque la sortie 14 de délivrance du dioxyde de carbone est ouverte, le dioxyde de carbone liquide issu du réservoir de stockage 10 est envoyé à l'entrée 18 de l'installation de filtration. Il arrive à cette entrée à une température sensiblement égale à -20°C sous une pression sensiblement égale à 20 bars. En fonction de la position de l'organe de commande 42, le dioxyde de carbone est envoyé dans l'une ou l'autre des branches 22A, 22B.

Le dioxyde de carbone liquide circule alors dans l'un des organes de filtration. Lors du passage dans l'organe de filtration, il subit une légère diminution de sa pression du fait de la perte de charge résultant de l'organe de filtration. Toutefois, dans le cas présent de filtration de C02, en sortie de l'organe de filtration, la pression reste supérieure à la pression de solidification (formation de neige) du dioxyde de carbone à la pression considérée. Celle-ci est typiquement de 5,33 bars à -20°C. Le dioxyde de carbone circule donc en phase liquide jusqu'à la sortie 14 de l'installation de filtration.

Lorsque la sortie 14 est obturée, par exemple du fait d'une action volontariste de l'utilisateur sur une vanne, souhaitant ainsi interrompre la distribution, le dioxyde de carbone cesse de circuler au travers d'une des boucles de filtration.

On le conçoit alors, sous l'action de la température ambiante, le dioxyde de carbone en amont de cette vanne et donc en particulier en amont de la sortie 14 et sur la portion située en amont de l'organe de filtration actif, subit une élévation de température qui provoque une montée de la pression.

On comprend qu'une telle montée en pression qui ne serait pas maîtrisée peut conduire à la formation de gaz dans le circuit, et poser donc de sérieuse difficultés (temps de reconditionnement) lors de la remise en marche de l'installation.

Pour cette raison, l'installation représentée comporte avantageusement le déverseur 38 fonctionnant de la façon suivante : lorsque du fait de l'arrêt, la pression dans la canalisation 19 a augmenté d'environ 8 bars (pression différentielle de déclenchement du déverseur) par rapport à la pression dans le réservoir de stockage 10, c'est-à-dire qu'elle atteint une pression sensiblement égale à 28 bars, le déverseur 38 devient passant et assure ainsi une circulation du dioxyde de carbone liquide vers le réservoir 10 (la phase gazeuse ainsi éventuellement extraite vient alimenter le ciel gazeux du réservoir 10).

L'existence d'une telle boucle de renvoi assure un maintien du dioxyde de carbone sous forme de liquide franc quel que soit le point de l'installation, et quelle que soit la durée d'absence de prélèvement depuis la sortie 14 de l'installation.

Comme déjà signalé, une telle installation peut être utilisée pour des fluides cryogéniques variés présentant une phase liquide pour au moins un couple pression/température compris entre 6 et 25 bars et -100°C et 0°C.

Afin de garantir l'obtention, en sortie de l'installation, du fluide cryogénique sous forme de liquide franc, il convient que l'organe de filtration provoque une perte de charge inférieure à 7 bars et préférentiellement inférieure à 5 bars, typiquement comprise entre 0,2 et 5 bars. De plus, la pression en amont de l'organe de filtration doit être suffisante pour que par exemple dans le cas du CO₂ la différence entre la pression à l'entrée d'alimentation et la perte de charge soit supérieure à la pression de solidification du fluide cryogénique.

Une telle installation est également adaptée pour la filtration de protoxyde d'azote liquide stocké par exemple sous une pression comprise entre 16 et 25 bars et avantageusement égale à 20 bars et à une température comprise entre -25°C et -15°C et avantageusement sensiblement égale à -20°C.

Les expérimentations effectuées dans le domaine pharmaceutique à l'aide de l'installation décrite ici ont permis de démontrer qu'elle assure une filtration du fluide cryogénique en phase liquide pour les impuretés ayant un diamètre supérieur à 0,1 µm.

La présence des deux branches 22A, 22B de filtration permet de procéder au remplacement ou au nettoyage d'un organe de filtration sans qu'il soit nécessaire d'arrêter l'installation. Il suffit pour démonter l'un des organes de filtration de dériver le flux liquide au travers de l'autre organe de filtration.

A titre illustratif, pour procéder au nettoyage de l'installation, et en particulier des organes de filtration, voire même à leur stérilisation, par exemple entre deux périodes d'utilisation, on pourra procéder à une opération de stérilisation telle que traditionnellement recommandée par la Pharmacopée, telle qu'utilisant un fluide chaud, par exemple un gaz chaud (par exemple de la vapeur d'eau).

On se reportera par exemple, pour plus d'informations concernant ces opérations de stérilisation d'installations à l'aide d'un fluide chaud, aux deux documents suivants : EP-A-762046 et WO96/09510.

Ainsi en considérant l'exemple de l'installation de la figure 1, il est tout à fait possible d'y prévoir des moyens (non représentés sur cette figure) permettant d'envoyer de la vapeur d'eau (ou un autre fluide chaud) dans l'installation, par exemple par une ligne additionnelle se piquant au niveau de l'entrée 18 (balayage à l'aide du gaz chaud non seulement des filtres et de l'aval des filtres mais également de l'amont des filtres représenté par la portion 19), ou encore à titre illustratif se piquant sur la conduite 19 juste en amont de la vanne de dérivation 24 (balayage à l'aide du gaz chaud des filtres et de l'aval des filtres).

On prévoira alors avantageusement dans un tel cas un piquage (par exemple au niveau de la sortie 14) permettant l'élimination des condensats.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

## Revendications

1. Installation (12) de filtration en phase liquide d'un fluide cryogénique présentant une phase liquide pour au moins un couple pression/température compris entre 6 et 25 bars d'une part et -100°C et 0°C d'autre part, comportant, en milieu ambiant, un organe (30A, 30B) de filtration disposé entre une entrée (18) d'alimentation du fluide cryogénique et une sortie (14) d'utilisation du fluide cryogénique filtré, dans laquelle l'organe de filtration (30A, 30B) est apte à filtrer les micro-organismes et/ou particules dont la taille est supérieure ou égale à 0,1 µm, et est adapté pour provoquer une perte de charge inférieure à 7 bars, laquelle installation comporte, à l'entrée d'alimentation (18), des moyens (10) pour fournir, à l'organe de filtration (30A, 30B), le fluide cryogénique en phase liquide.

2. Installation selon la revendication 1, caractérisée en ce que l'organe de filtration est adapté pour provoquer une perte de charge inférieure à 5 bars.

3. Installation selon la revendication 1 ou 2, caractérisée en ce que lesdits moyens (10) pour fournir à l'organe de filtration (30A, 30B) le fluide cryogénique en phase liquide, sont aptes à fournir le fluide cryogénique en phase liquide sous une pression comprise entre 6 et 60 bars.

4. Installation selon l'une quelconque des revendications précédentes, caractérisée en ce qu'elle comporte un déverseur (38) dont l'entrée est piquée en amont de l'organe de filtration (30A, 30B).

5. Installation selon la revendication 4, caractérisée en ce que les moyens pour fournir, à l'organe de filtration (30A, 30B), le fluide cryogénique en phase liquide, comportent un réservoir (10) de stockage du fluide cryogénique sous pression, et en ce que la sortie du déverseur (38) est reliée audit réservoir (10).

6. Installation selon l'une quelconque des revendications précédentes, caractérisée en ce que le filtre est un filtre en céramique microporeuse délimitant un ensemble de canaux d'entrée parallèles (52).

7. Installation de filtration de dioxyde de carbone en phase liquide selon l'une quelconque des revendications précédentes, caractérisée en ce que les moyens (10) pour fournir le fluide cryogénique en phase liquide sont adaptés pour fournir le fluide sous une pression comprise entre 17 et 23 bars et à une température comprise entre -25°C et -15°C.

8. Installation selon la revendication 7 dans sa dépendance à la revendication 4, caractérisée en ce que le déverseur (38) a une pression différentielle de déclenchement comprise entre 2 et 10 bars.

9. Installation de filtration de protoxyde d'azote selon l'une quelconque des revendications 1 à 6, caractérisée en ce que les moyens pour fournir le fluide cryogénique en phase liquide sont adaptés pour fournir le fluide sous une pression comprise entre 16 et 25 bars et à une température comprise entre -25°C et -15°C.

10. Installation selon l'une quelconque des revendications précédente, caractérisée en ce qu'elle comporte des moyens permettant d'envoyer un fluide chaud tel que de la vapeur d'eau dans l'installation, de façon à permettre de balayer à l'aide de ce fluide chaud l'une ou l'autre des portions suivantes :
- la portion située entre l'entrée (18) d'alimentation du fluide cryogénique et la sortie (14) d'utilisation du fluide cryogénique filtré, comportant l'organe de filtration;
- l'organe de filtration et la portion située entre cet organe et la sortie (14) d'utilisation du fluide cryogénique filtré.

11. Procédé de filtration en phase liquide d'un fluide cryogénique présentant une phase liquide pour au moins un couple pression/température compris entre 6 et 25 bars d'une part et -100°C à 0°C d'autre part, selon lequel on introduit, à l'entrée d'un organe de filtration (30A, 30B) apte à filtrer les micro-organismes et/ou particules dont la taille est supérieure ou égale à 0,1 µm, et adapté pour provoquer une perte de charge inférieure à 7 bars, disposé en milieu ambiant, le fluide cryogénique en phase liquide.

12. Procédé selon la revendication 11, caractérisé en ce que la perte de charge du fluide à l'intérieur de l'organe de filtration est inférieure à 5 bars.

13. Procédé selon la revendication 11 ou 12, caractérisé en ce que, la perte de charge du fluide à l'intérieur de l'organe de filtration est comprise entre 0,05 bar et 5 bars.

14. Procédé selon la revendication 13, caractérisé en ce que, la perte de charge du fluide à l'intérieur de l'organe de filtration est supérieure ou égale à 0,2 bar.

15. Procédé selon l'une des revendications 11 à 14, caractérisé en ce que on introduit le fluide cryogénique à l'entrée de l'organe de filtration (30A, 30B) sous une pression comprise entre 6 et 60 bars.

16. Procédé selon l'une des revendications 11 à 15, caractérisé en ce que, en dehors des phases de consommation du fluide cryogénique filtré, on assure, au moins périodiquement, une circulation en boucle du fluide cryogénique liquide au moins en amont de l'organe de filtration (30A, 30B).

17. Procédé selon l'une des revendications 11 à 16, caractérisé en ce que, la différence entre la pression du fluide cryogénique à l'entrée d'alimentation (18) et la perte de charge est supérieure à la pression de solidification du fluide cryogénique considéré.

18. Utilisation d'un organe de filtration (30A, 30B) disposé en milieu ambiant, apte à filtrer les micro-organismes et/ou particules dont la taille est supérieure ou égale à 0,1 µm, et adapté pour provoquer une perte de charge inférieure à 7 bars, afin de filtrer en phase liquide un fluide cryogénique présentant une phase liquide pour au moins un couple pression/température compris entre 6 et 25 bars d'une part et -100°C et 0°C d'autre part.

19. Utilisation selon la revendication 18, dans laquelle le fluide cryogénique est introduit dans l'organe de filtration (30A, 30B) sous une pression comprise entre 6 et 60 bars.

20. Utilisation selon la revendication 18 ou 19, caractérisée en ce que la perte de charge du fluide à l'intérieur de l'organe de filtration est inférieure à 5 bars.

21. Utilisation selon l'une des revendications 18 à 20, caractérisée en ce que, la perte de charge du fluide à l'intérieur de l'organe de filtration est comprise entre 0,05 bar et 5 bars.

22. Utilisation selon la revendication 21, caractérisée en ce que, la perte de charge du fluide à l'intérieur de l'organe de filtration est supérieure ou égale à 0,2 bar.

23. Utilisation selon l'une des revendications 18 à 22, caractérisée en ce que, la différence entre la pression d'introduction du fluide à l'entrée d'alimentation (18) de l'organe et la perte de charge est supérieure à la pression de solidification du fluide cryogénique considéré.
